# EUROPEAN PATENT SPECIFICATION

(11) **EP 2 294 921 B1**
(45) Date of publication and mention of the grant of the patent: **27.03.2013**
(21) Application number: 09011674.0
(22) Date of filing: 11.09.2009
(51) Int. Cl.: A22C 11/12, B65B 51/04

(54) **Magazine bar with loading location**
Magazinstange mit Ladestelle
Barre de chargeur avec emplacement de chargement

(43) Date of publication of application: 16.03.2011
(73) Proprietor: Poly-clip System GmbH & Co. KG, 65795 Hattersheim (DE)
(72) Inventor: Melchert, Uwe, 60385 Frankfurt am Main (DE); Clößner, Stephan, 35630 Ehringshausen Katzenfurt (DE)
(74) Representative: Eisenführ, Speiser & Partner

(56) References cited:
- EP-A- 1 571 090
- DE-U1-202007 013 669
- US-A- 4 001 926
- US-A- 4 100 716
- US-A1- 2003 073 397

## Description

The invention concerns a magazine bar for a clipping machine as set forth in claim 1 and a method of loading such a magazine bar as set forth in claim 12. In particular the invention concerns a magazine bar for a clipping machine for temporarily storing and delivering closure clips which are assembled together to provide at least one clip strip, comprising a first and a second frontal magazine bar end, and a storage region which extends between the two magazine bar ends and into which a clip strip can be fed by way of a first loading location and from which a clip strip can be discharged in the discharge direction by way of a removal location provided at the second frontal magazine bar end. A prior art magazine bar is known from EP-A-1 571 090.

Magazine bars are used singly or doubly, for example in what are referred to as single-clipping machines or double-clipping automatic machines which for example can be used as a tabletop model or on a rolling frame structure. Such machines or automatic apparatuses are used for closing generally cylindrical or bag-shaped packagings which can be filled with for example sausage meat, sealing material and the like. The area of use of those machines or automatic apparatuses can extend from manual handicraft situations to large-scale undertakings.

The closure clips which are to be fed to a magazine bar are assembled together to form clip strips in such a way that they bear against each other with their clip planes and are temporarily combined together by means for example of an adhesive tape at the clip backs. The closure clips are individually separated from a clip strip which is conveyed out of the removal location, for a clipping closure operation. The closure clips can be substantially U-shaped, with parallel or divergent clip limbs and with a round or flat clip back. They can however also be of a shape which differs from the U-shape.

The storage region can accommodate only a certain number of clip strips and thus only a limited number of closure clips, in particular in dependence on the length of the magazine bar. In the cases where the feed of a clip strip to the removal location of the magazine bar is to be effected by the force of gravity acting on the clip strip, magazine bars are in practice usually arranged inclinedly with respect to the horizontal with their longitudinal centre lines, preferably substantially vertically in a plane oriented in orthogonal relationship with a foundation or floor. A substantially vertical orientation however is also appropriate solely for reasons of space.

In order to be able to provide as many closure clips as possible in the storage region of a magazine bar, that is to say to have a sufficiently large time buffer until the next necessary re-loading operation, the magazine bars must be of a certain length. It is only when they are of a sufficient length that a sufficiently large store of closure clips can be provided or temporarily stored in the storage region so that the time interval between the loading operations is sufficiently long or the operating effort is reduced by reducing the frequency of the loading operations. The shorter a magazine bar is, the correspondingly more frequent does it have to be re-loaded in dependence on the processing speed of a clipping machine.

As, as already mentioned, the magazine bars in practice must be arranged substantially vertically or at least with a sufficiently high angle of inclination, in respect of their longitudinal centre line, with respect to the horizontal, so that the clip strip or closure clips can be fed to the removal location solely by the force of gravity acting thereon, in practice magazine bars are used which in the mounted condition project far above the eye level of operators standing on the ground. In that situation the loading location is disposed at the first, that is to say upper front end of the magazine bar. Ladders, fixedly installed platforms or the like aids are however unsuitable not only for safety reasons in order to facilitate access for the operators to the loading location, for clipping machines are mostly displaceable or movable manually on rollers, and possibly have to be moved in the short term from one position of use to another or to a parking storage facility.

German Utility Model No 20 2004 007 722 discloses an apparatus for more easily selecting between two types of closure clips or for changing from one type of closure clip to another, which has two magazines formed by rails coupled together, for receiving a respective type of closure clip. Loading of both magazines is effected in known manner by way of the loading location at the first upper end of the respective magazine bar. During operation of the associated clipping machine the second of the two bars has a pin for arresting the type of closure clips, other than the type which is currently in use. Changing from one type of closure clip to another is effected by the closure clips of the first type being arrested with a pin which is to be passed through the first rail, in order thereupon to remove the second pin from the second rail to release the closure clips of the second type.

A problem with the above-discussed solutions is that the magazine bars cannot be easily loaded by persons of small height. No magazine bar is known, in which the feed of the closure clips is effected with the support of the force of gravity, which can accommodate a sufficiently large store of closure clips or clip strips, and which in that respect can be easily loaded or re-loaded.

The problem of the invention is to provide a magazine bar for clip strips comprising closure clips and a method of loading a magazine bar, which permit easy loading, in particular in an ergonomically posture on the part of an operator.

In regard to the magazine bar that problem is solved by the features of claim 1. Claims 2 to 1 which are appendant to claim 1 set forth advantageous configurations in respect thereof. In particular a magazine bar according to the invention for a clipping machine for temporarily storing and delivering closure clips which are assembled together to provide at least one clip strip, comprises a first and a second frontal magazine bar end, and a storage region which extends between the two magazine bar ends and into which a clip strip can be fed by way of a first loading location and from which a clip strip can be discharged in the discharge direction by way of a removal location provided at the second frontal magazine bar end. In that respect the first loading location is provided between the first and second frontal magazine bar ends in such a way that a first and a second magazine bar portion is formed on both sides of the loading location. In that respect preferably the magazine bar portion which represents the magazine bar portion which is furthest remote with respect to the removal location, that is to say in the discharge direction along the magazine bar corresponding to the initial portion of a magazine bar, is to be considered as the first magazine bar portion.

Upon loading or re-loading of a magazine bar with closure clips, hitherto, as discussed hereinbefore, a magazine bar had to be loaded with clip strips at its first frontal magazine bar end, corresponding to an input-end magazine bar end that is remote from a clipping machine. That is no longer required with the magazine bar according to the invention. A loading operation can be effected by way of a first loading location which is readily accessible. The first loading location is ergonomically well compatible and can be easily reached by an operator, without auxiliary means. In that way, there is no longer any need for the magazine bar to be loaded from the end that is remote from the machine, such a loading operation being difficult not just for small people or endangering personal operator safety.

Particularly when the magazine bar is substantially vertically oriented, it is of significance that the first loading location is readily accessible. In that respect the magazine bar can be subdivided by the first loading location at least into two regions or magazine bar portions of substantially equal length. That is appropriate in particular when a magazine bar is of such a length that, when the first loading location is arranged centrally, that affords ready accessibility for the operating personnel and when the second magazine bar portion which is arranged downstream of the loading location in the discharge direction is at least of the length of a clip strip.

In that respect, the discharge direction does not face in all cases towards a clipping machine, for magazine bars can also be of a curved configuration (with a non-linear longitudinal centre line). Rather, the discharge direction refers to the storage region or to guide means which are possibly provided, for example a guide rail. It corresponds to the direction in which the clip strips are progressively displaced by the processing procedure, in particular in relation to the orientation of the magazine bar portion in which a clip strip is to be disposed at the indicated moment.

The magazine bar however can also be subdivided by the loading location into two magazine bar portions of substantially unequal length. For certain magazine bar lengths and arrangements, a subdivision in the ratio of 1/3 to 2/3 of the first magazine bar portion to the second magazine bar portion can be particularly suitable. In comparison with subdivision into substantially equal-length portions, that subdivision is of use in relation to shorter magazine bars. If in contrast a magazine bar is very long so that a large number of clip strips can be temporarily stored, then once again a subdivision in a ratio of for example 2/3 to 1/3 can be more advantageous. In that respect the position of the loading location is primarily of significance in terms of accessibility; the storage capacity is not affected, only the sequence of the method steps which are to be observed for loading a magazine bar by way of the loading location is influenced, as will be described in greater detail hereinafter.

The magazine bar can also be subdivided into more than two regions or magazine bar portions which are of equal or unequal length, that is to say further first loading locations can be provided between the two frontal magazine bar ends. Depending on the respective design configuration of the clipping machine or the orientation of the magazine bar it is preferable in that respect to provide the region for a first loading location, which can be most easily reached ergonomically by an operator. The position of a first and possibly further first loading locations is therefore to be defined substantially in relation to the length of the clip strips to be processed and in relation to the required storage capacity. Such adaptation means that the loading location which is last in the discharge direction should be arranged at least so far from the second frontal magazine bar end, that is to say remote from the removal location, that a clip strip which is supplied for the processing operation is completely received by the magazine bar before it reaches the second frontal magazine bar end, that is to say it can be completely accommodated by the magazine bar without having to be pushed beyond the second frontal magazine bar end (the removal location).

A magazine bar according to the invention can further be adapted to be loaded by way of the first loading location and by way of the first frontal magazine bar end. A loading location at the first magazine bar end can then be viewed as a second loading location. A second loading location is advantageous for example when the feed of the clip strips is effected not just by the force of gravity so that the magazine bar can also be arranged for example horizontally. That permits flexible use of the magazine bar. In such a situation therefore the first magazine bar end is also possibly easily accessible, possibly even more easily accessible than the first loading location, depending on the respective arrangement of the clipping machine. If the clipping machine is to be arranged in a position for example in which it is not accessible from one side or the other, then it is of particular advantage if loading can be effected both by way of the first loading location and also by way of a second loading location arranged at the first magazine bar end. That is particularly appropriate if the magazine bar is not arranged substantially vertically but is inclined only through some degrees relative to the horizontal, for example in the range of 20 to 60 degrees.

When loading by way of such a second loading location a clip strip is preferably guided from one end of a guide means, for example a guide rail, by way of the guide means into the storage region.

The first loading location can therefore be provided as just a single loading location. Preferably however there is also a second loading location at the first frontal magazine bar end, that is to say in one of the configurations which are already known hitherto. Optionally, further first loading locations can also be provided in regions between the two frontal magazine bar ends so that it is possible selectively to decide in an individual case whether clip strips are to be loaded by way of a first loading location or by way of the first frontal end corresponding to a second loading location (or are to be removed when switching over from one type of closure clip to another).

As already mentioned a loading location can also be in the form of a loading location and/or unloading location. A loading location can therefore be adapted to primarily feed clip strips to the magazine bar or however also if necessary to be able to remove clip strips. The possibility of unloading is useful for example when closure clips of various types are to be used and if closure clips of a first type of a clip strip are left behind, that is to say only half for example of a clip strip was used up/processed. That remaining portion of the clip strip can then be removed by way of a first loading location, even if clip strips of a second type of closure clip were already fed to the storage region of the magazine bar. In that way it is possible for example to save time when changing from one type of clip to another.

Retaining means can be provided in the region of the first loading location and/or further first loading locations. Preferably retaining means are provided in the region of the end, that faces towards the first or further loading location, of the first or respective magazine bar portion. Preferably the retaining means are in the form of a clip strip retaining means which are reversibly releasable from a retaining position, for retaining a clip strip disposed in the first or the respective magazine bar portion. The retaining means can thus prevent slippage of clip strips in the storage chamber. A retaining position corresponds in that respect to a position in which a clip strip is prevented by a retaining means from moving past the retaining means, that is to say it cannot slip downwardly in the discharge direction when a magazine bar is oriented substantially vertically.

Preferably a retaining action is effected mechanically. Preferably the clip strip retaining means have at least one retaining element which is elastically biased into the retaining position. That affords the advantage that it ensures an inherent safeguard for the elastic biasing effect provides that a first of for example two defined positions is adopted by the retaining element even when a control system is defective or power fails. Depending on the respective use involved that first position can selectively be the position in which the retaining element retains the clip strips or the position in which it releases the clip strips.

Retaining means can thus take over the function of a safeguard to prevent the clips from slipping through. It is also possible for a magazine bar according to the invention to be loaded by way of a first loading location if the magazine bar does not have any retaining means. In that case, supplied closure clips or clip strips can be manually prevented from slipping down in the storage region or on the guide rail, for example by a finger of an operator, but for safety reasons that is preferably effected for example by a retaining element which can be manually inserted, in the form of a locking bar or bolt or the like.

In addition the clip strip retaining means preferably have release means for reversibly releasing the retaining means from their retaining position. In that case release means according to the invention can be actuatable manually or by motor means. Release means which can be actuated by motor means or automatically can in that case be controllable and actuatable by a machine control system. That affords the advantage that clip strips can be deliberately and targetedly released, for example only after the supply of a certain number of clip strips, or a given number of clip strips.

The retaining element, like also the release means, are in that case preferably arranged at the height of the first loading location. In that way the retaining element and also the release means can be reached by operating personnel equally well as the first loading location. On the other hand full use is made of the capacity of the magazine bar. The retaining means which is adapted to retain clip strips which are pushed to a position above the retaining element therefore has at least one retaining element and release means which are respectively actuable manually and/or automatically.

In addition the storage region can have guide means for guiding the clip strips. In that case the guide means preferably extend from the first magazine bar end to the second magazine bar end. In that respect it is advantageous if the guide means of a magazine bar are interchangeable, for example when changing from one type of clip to another. Interchangeable guide means, with a specific magazine bar associated with a specific clip machine, can provide for achieving optimised guidance in the storage region, even if a change in that type of clip to a type of clip of different cross-sectional geometry is required.

If a guide rail forming guide means is provided for guiding the clip strips in the storage region, the cross-section of the guide rail preferably depends on the geometry of the closure clips. The cross-sectional geometry can be such that various types of closure clips can be accommodated by the guide rail. The cross-sectional geometry can also be specifically adapted to the geometry of a certain type of clip. Preferably the cross-section of the guide rail is rectangular, in which case individual corners can be rounded off, preferably the corners which are enclosed by a closure clip.

Preferably insertion means are provided in the region of a first loading location. In that case the insertion means are preferably arranged in such a way that they overlap with the guide means, that is to say together with the guide means they form an overlap region as is described in greater detail hereinafter.

The purpose of the insertion means is to permit orientation of clip strips when supplying or removing same. Insertion mean serve to simplify a loading operation insofar as they predetermine the direction and spacing relative to the guide means when guiding closure clips or clip strips to the storage region. A loading or unloading operation is therefore assisted by virtue of the fact that the closure clips or the clip strips are oriented by the insertion means in a defined direction and at a defined spacing in order to be exactly oriented when being fed into the storage region or in relation to the guide means, that is to say to exactly meet the guide means, for example a guide rail. To facilitate a loading operation and to be able to design the insertion means in the optimum configuration it is advantageous if the insertion means are interchangeable.

To be able to guide the clip strips to a clipping machine in an orientation which is appropriate for further processing, it is advantageous if the magazine bar portion which is last in the discharge direction, for example the second magazine bar portion, is coupled to a clipping machine in horizontal orientation. With substantially vertically oriented magazine bars a magazine bar portion which is last in the discharge direction therefore preferably involves a curvature, in particular in the region of the removal location. A curvature in the region of the removal location provides that a magazine bar which is arranged inclinedly relative to the horizontal, in the region of the removal location, can also be optimally oriented in relation to a clipping machine.

In order to be able to guide the clip strips into the storage region in a controlled fashion, it is advantageous if at least one securing means is provided in the storage region, in particular in conjunction with the guide means. The at least one securing means is adapted to assist with guidance of the clip strips in the storage region. A securing means therefore serves for example to avoid the clip strips being uncontrolledly oriented in the storage region. The securing means can be of different configurations. Thus it can be in the form of a rail which is arranged in the magazine bar in such a way that the outsides of the clip backs of the closure clips can bear against it.

In addition it is advantageous if the securing means are interrupted in the region of the loading locations, in particular in the region of the first loading location, to permit a feed of a clip strip. In that case the above-mentioned insertion means can be part of the securing means.

Furthermore the storage region of a magazine bar according to the invention can preferably be at least partially enclosed by a housing, in particular a bar housing. A housing is to be provided only if necessary, in particular in dependence on the orientation in which the magazine bar is to be arranged and the form of the guide means and the closure clips.

In that case a housing can perform the function of a securing means. A housing can be in the form of a securing means or can be provided to be coupled to a securing means or to be arranged in conjunction with a securing means. A housing can be of a U-shaped cross section. A housing can enclose the storage region partially, or it can enclose the storage region completely.

Securing means can be formed by a rail which is arranged in spaced relationship with preferably provided guide means. The securing means can be interrupted at least in the region of the first loading location. The securing means can be provided with insertion means at least in the region of the first loading location.

In regard to the method the foregoing problem is solved by the features of claim 12. Appendant claims 13 to 15 set forth advantageous configurations in respect thereof. In particular, the method according to the invention involves the use of a magazine bar designed in accordance with the foregoing description. Furthermore the loading operation for loading a magazine bar for closure clips, in particular closure clips for a packaging material processed by a clipping machine, is effected in such a way that a first clip strip is fed by way of the first loading location into the second magazine bar portion arranged in the discharge direction in relation to the loading location, that is to say in the storage region in the direction of the clipping machine (correspondingly downwardly when the magazine bar is oriented substantially vertically). Thus a first clip strip is introduced into the second magazine bar portion by way of the first loading location. That is followed by feeding a second clip strip by way of the first loading location into the second magazine bar portion, displacement of the second clip strip out of the second magazine bar portion into the first magazine bar portion, temporarily fixing the second clip strip in the first magazine bar portion, feeding a third clip strip by way of the first loading location into the second magazine bar portion and releasing the second clip strip in the first magazine bar portion.

In that respect the expression first clip strip denotes a clip strip which is provided to be stored in the second magazine bar portion. If a plurality of clip strips are supplied, first clip strips can be optionally displaced at any time out of the second magazine bar portion into the first magazine bar portion.

Depending on the respective location at which the retaining means are arranged or depending on the respective length of the second magazine bar portion arranged in the discharge direction with respect to the loading location or depending on the respective length of the clip strips, the procedure is already to be as follows with a first clip strip or only with one of or a plurality of following first clip strips: For the further loading operation, in accordance with the invention the procedure is to be such that, at the earliest at the moment in which a second fed clip strip is arranged completely in the storage region of the second magazine bar portion or is guided on the guide means, the second clip strip is displaced in the storage region or on the guide means back in opposite relationship to the discharge direction into the first magazine bar portion of the magazine bar, in particular to a position beyond the retaining means, so that the second clip strip is prevented from slipping back by the at least one retaining element. A second clip strip is therefore supplied and pushed in the storage region or on the guide rail in opposite relationship to the discharge direction (upwardly) into the first magazine bar portion in order to ensure a free storage space in the region of the loading location and thus access for at least one further second clip strip. As a result the region of the storage space beneath the retaining means, in the region of the loading location, remains free so that a further second clip strip can be supplied.

Second clip strips are thus intended to be fed by way of the first loading location into the second magazine bar portion, displaced out of the second magazine bar portion into the first magazine bar portion, and temporarily fixed in the first magazine bar portion.

Finally, prior to release of the second clip strip or the second clip strips in the first magazine bar portion, a feed of a third clip strip is optionally possible into the second magazine bar portion by way of the first loading location. That is appropriate in particular when the storage capacity of the magazine bar is to be fully utilised.

In this case a plurality of first clip strips can be fed to the second magazine bar portion by way of the loading location before a second clip strip is fed to the first magazine bar portion by way of the loading location and the second magazine bar portion.

A plurality of second clip strips can also be fed to the first magazine bar portion by way of the loading location before at least one third clip strip is fed to the second magazine bar portion by way of the loading location. That is irrespective of whether first clip strips have already been supplied.

As soon as clip strips have been sufficiently supplied, the clip strips which are retained in the first magazine bar portion can be released, in the region of the retaining means, by the release means so that they can move in the storage region or on the guide rail in the discharge direction to a last-supplied second or third clip strip or to the removal location (to the end of the magazine bar, that is near the machine), to a separating window, for example they can automatically slip under the effect of the force of gravity acting thereon.

Depending on the respective length of the magazine bar or the length of the clip strips or the type of closure clips, the sequence when loading can differ from the sequence set forth. The number of supplied first, second and third clip strips is in that case dependent on the dimensions of the clip strips or the first and second magazine bar portions or the position of a respective loading location. In particular loading can also be effected by way of a plurality of loading locations, also at the same time, for example by a plurality of operators. The clip strips which can possibly be fed by way of the first frontal magazine bar end can be referred to as fourth clip strips. Fourth clip strips can be fed to a position at a retaining means, to first, second or third clip strips already accommodated by the storage region, or to the removal location, depending on the extent to which the storage region is already equipped with clip strips.

Further advantageous configurations and an embodiment by way of example of the invention are described hereinafter with reference to the drawing 1a. The Figure thereof shows a perspective view of a magazine bar according to the invention. Further, the drawing 1 b shows a line drawing of a subject matter according to the drawing 1a in a perspective view.

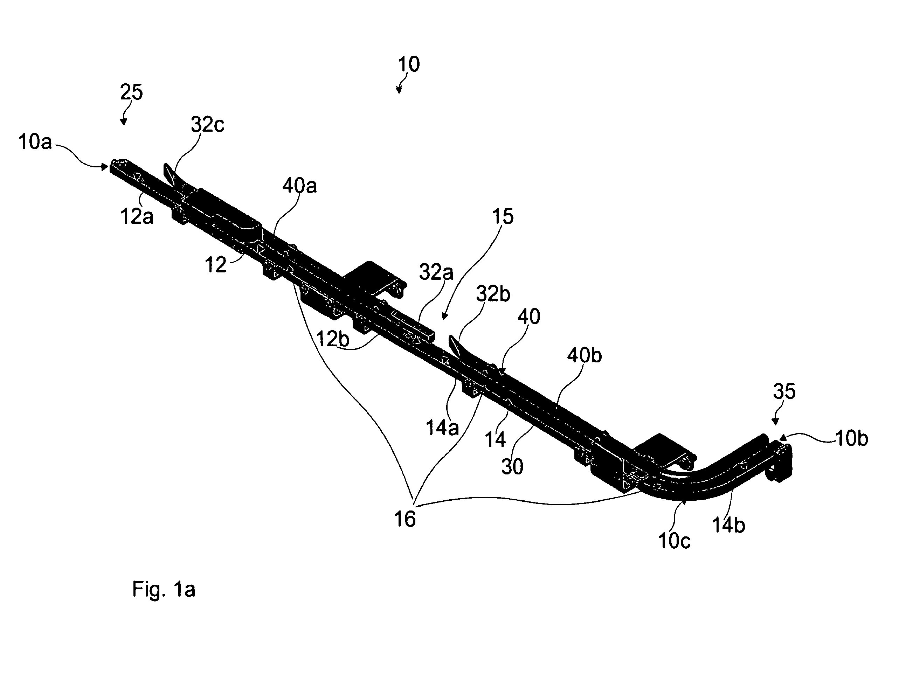

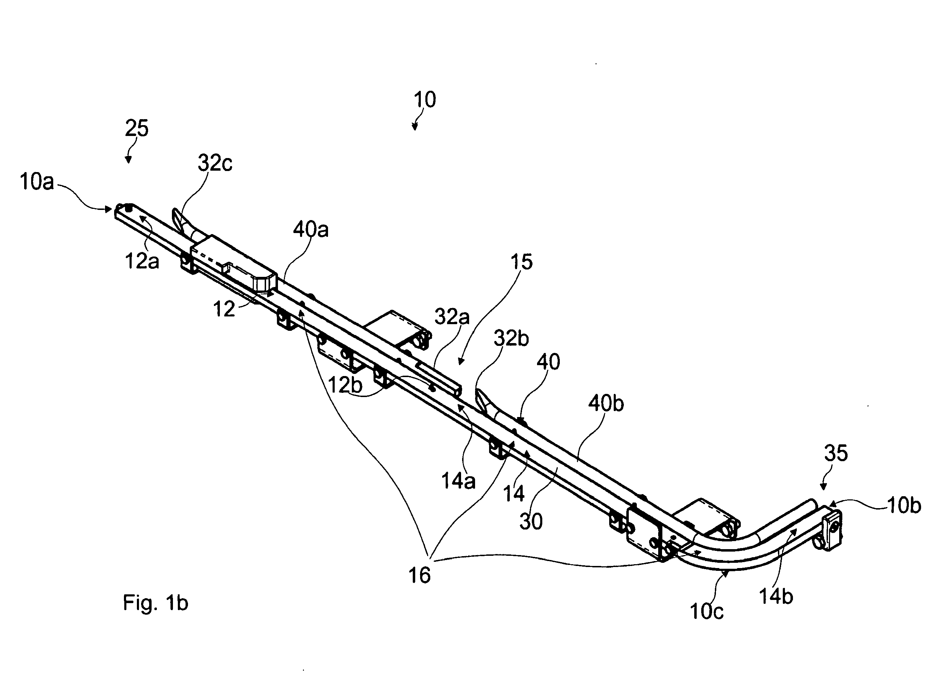

The Figure 1 a shows a magazine bar 10 according to the invention which has as main components a first loading location 15, a storage region 16, a second loading location 25, guide means 30 and securing means 40. The magazine bar 10 is inclined through some degrees relative to the horizontal and has a first frontal end 10a as well as a second frontal end 10b being arranged opposite to each other. At the second frontal end 10b, it is arranged the removed location 35 for discharging a clip strip or a single clip, respectively, to e.g. a clipping machine (not shown). A single clip can be separated from the clip strip in the clipping machine. The discharge direction for the clip strip is defined as the direction from the first frontal magazine bar end 10a to the second frontal magazine bar end 10a.

As it can be seen from the Fig. 1a, the fist loading location 15 separates the magazine bar 10 or the storage region 16 in a first magazine bar portion 12 and a second magazine bar portion 14. As it further can be seen, the first magazine bar portion 12 is shorter than the second magazine bar portion 14. Both magazine bar portions 12, 14 have a first and second end 12a, 12b, 14a, 14b of the magazine bar portion 18, 14 wherein the first end 12a of the first magazine bar portion 12 corresponds to the first frontal magazine bar end 10a whereas the second end 14b of the second magazine bar portion 14 corresponds to the second frontal magazine bar end 10b or the discharge location 35, respectively. The second end 12b of the first magazine bar portion 12 and the first end 14a of the second magazine bar portion 14 surrounded the first loading location 15. It has to be noted that the magazine bar 10 has a curvature 10 in the region of the removal location 35 at the second end 14b of the second magazine bar portion 14.

The storage region 16 extending between the first and second frontal magazine bar ends 10a, 10b is accessible for a clip strip (not shown) by way of the first loading location 15. A clip strip can be discharged in the discharge direction by way of the removal location 35 provided at the second frontal magazine bar end 10b.

At its first frontal magazine bar end 10a the magazine bar 10 has a second loading location 25, that is to say in the region of the first end 12a of the first magazine bar portion 12. Clip strips (not shown) can also be fed by way of the second loading location 25. Clip strips can also be discharged in opposite relationship to the discharge direction manually by way of the first or the second loading location 15, 25.

Provided in the region of the end 12b of the first magazine bar portion 12, that faces in the discharge direction to the first loading location 15, are clip strip retaining means (not shown) which are reversibly releasable from a retaining position, for retaining a clip strip (not shown) disposed in the first magazine bar portion 12. The retaining means have at least one retaining element (not shown) and release means (not shown).

The storage region 16 has guide means 30 in the form of a guide rail 30 for guiding the clip strips, which extend from the first magazine bar end 10a to the second magazine bar end 10b. The guide rail 30 is continued continuously over the storage region along same, that is to say the guide rail 30 goes from the first magazine bar portion 12 into the second magazine bar portion 14, in particular in a steady progression.

Provided in the region of the first loading location 15 are insertion means 32a, 32b which overlap with the guide means 30. In the illustrated configuration the insertion means 32a, 32b correspond to a portion of the securing means 40, in particular a portion of a first and second securing means portion 40a, 40b respectively. The securing means 40 thus have an interruption in the region of the first loading location 15, which is adapted to facilitate feeding clip strips (not shown) to the storage region 16. In that case the interruption subdivides the securing means 40 into the upper first securing means portion 40a which is remote from the clipping machine or the discharge end 35, respectively, and the lower second securing means portion 40b which is towards the clipping machine, wherein the securing means portions 40a, 40b substantially follow the configuration of the guide rail 30. In particular the interruption is adapted not to cause difficulty in terms of feeding clip strips to the first loading location 15 arranged readily accessibly for an operator (not shown), in a posture which is ergonomically advantageous for an operator.

Essentially the insertion means 32a of the upper securing means portion 40a are in the form of insertion means 32a which are beneath the closure clips or clip strips and the insertion means 32b of the lower securing means portion 40b are in the form of insertion means delimiting the closure clips or clip strips.

As illustrated the securing means 40 end in the region of the second loading location 25 so that there is no interruption there. Nonetheless insertion means 32 are provided which as described facilitate a feed of clip strips (not shown).

In this case the insertion means 32a arranged in relation to a first loading location 15 in opposite relationship to the discharge direction (in the region of the second end 12b of the first magazine bar portion 12) can extend substantially straight and in particular parallel to the extent of the magazine bar 10. The insertion means 32b, 32c arranged in relation to the first or second loading location 15, 25 in the discharge direction (in the region of the first end 12a of the first or second magazine bar portion 12, 14 respectively) in contrast preferably have at their upper end an inclined insertion surface portion. Preferably the inclined insertion surface portion is such that the securing means portion 40a, 40b in question is guided away from the storage region in the region of the inclined insertion surface portion and in that way a loading region which can be adapted to the geometrical properties of a clip strip is formed.

Preferably the insertion means 32b, 32c arranged in the discharge direction in relation to the first or second loading location 15, 25 are adapted to the type of closure clip, in particular to the closure clip back (not shown). Preferably at their side facing in the direction of the loading location 15, 25 those insertion means 32b, 32c are of a flat configuration, that is to say flat at the side at which the closure clips meet the insertion means when they are being fed thereto. In that way, when dealing with a type of closure clip with a straight or flat clip back, in the clip feed operation, not only is a point contact made with the insertion means 32b, 32c, but a closure clip will bear flat against the insertion means 32b, 32c and is thus guided more accurately, with a lower level of friction or the like. The insertion means 32b, 32c, in dependence on the closure clip geometry, can also be of a round inwardly curved configuration at their side facing in the direction of the loading location 15, 25, corresponding to a concave curvature, or can be of any other desired geometry in order appropriately to permit contact which is in as surface relationship as possible, with a convex (round) clip back.

In addition the insertion means 32a arranged in opposite relationship to the discharge direction in relation to a first loading location 15 can narrow in the direction of the first loading location 15. If that should be found to be useful for guidance of a given type of closure clip, the narrowing (not shown) can be provided in relation to a plurality of directions in space. A narrowing configuration provides that a clip strip is brought closer to the storage region 16. In addition a narrowing configuration can avoid a clip strip rubbing excessively greatly against excessively sharp edges or remaining caught up. In addition, with a narrowing configuration, it is possible for the inclined insertion surface portion of an insertion means 32b, 32c which is arranged in the discharge direction in relation to a first or second loading location 15, 25 to be of a more moderate configuration or to be entirely omitted. That avoids an insertion means 32b, 32c which is arranged in the discharge direction in relation to a first or second loading location 15, 25 projecting excessively and thus increasing the risk of operators or objects remaining caught up thereon. Two insertion means 32a, 32b which are arranged in the region of an interruption and which are in mutually adjoining relationship can thus also be of such a configuration that the interruption in the securing means is only in the form of an opening, for example an incision, extending diagonally through the securing means.

Preferably mutually adjoining insertion means 32a, 32b form an overlap, that is to say an overlap relative to each other (not shown) and/or an overlap with the one or more guide means 30. An overlap ensures on the one hand that the function of the securing means 40 as a component for securing the closure clips or the clip strips is maintained along the entire region of the magazine bar 10, while on the other hand ensuring that the feed of closure clips or clip strips to be loaded is effected appropriately. In particular an overlap prevents closure clips or clip strips being displaced in the loading operation over the lower securing means portion 40b, instead of being fed between the guide means 30 and the lower securing means portion 40b. An overlap can also be formed by the securing means portions 40a, 40b themselves, for example for the situation where at least one of the two securing means portions 40a, 40b does not have any insertion means 32a, 32b or has insertion means 32a, 32b elsewhere than at the end of a securing means portion.

In that respect overlap relative to each other (not shown) is to be interpreted as that part of one of the two securing means portions 40a, 40b or insertion means 32a, 32b, that projects in the direction of the longitudinal extent of the magazine bar 10 beyond the other securing means portion 40a, 40b. In that respect a unit of length, for example centimetres, which is to be specified in the direction of the longitudinal extent of the magazine bar 10, can be interpreted as the measurement in respect of the overlap relative to each other.

The overlap relative to each other is preferably greater than the width of a single closure clip corresponding to the cross-section of the wire from which the clip is made. In that respect the overlap relative to each other is preferably also greater than the spacing at which a securing means 40a, 40b is arranged relative to the storage region 16 or the guide rail 30.

The securing means 40 which as mentioned are arranged to extend substantially parallel to the guide rail 30 secure or safeguard the clip strips (not shown) in the storage region 16, in particular on the guide rail 30. As illustrated the clip strips are preferably delimited at least at one side of the clip strips, in particular at the side at which the back of the closure clips (not shown) forming a clip strip is disposed. In that way a clip strip can be guided in a storage region 16 in any orientation, that is to say also in an orientation in which the clip strip without the securing means 40 would drop out of the storage region 16 or could at least be uncontrolledly guided in the storage region 16. With a guide rail 16, a securing means 40 prevents uncontrolled orientation or slipping out of the guide, in the fashion of a derailment. In that respect the guide rail 30 and the securing means 40 are preferably adapted to be connected together at the side of the guide rail 30, at which the guide rail 30 has means for being fixed itself, that is to say at the side of the guide rail 30, that is opposite to the side at which the central part of the closure clips, corresponding to the clip back, is guided.

To receive the clip strip retaining means (not shown), at least one retaining element (not shown) and release means (not shown), the arrangement can have a bar housing which is also not shown and which is U-shaped in cross-section for at least partially enclosing the storage region 16. A bar housing can be provided only in the region of the clip strip retaining means, but it can also be adapted to enclose a substantially larger part of the storage region 16. In particular the bar housing can also be in the form of the securing means 40 or can perform the function of a securing means 40.

A loading operation with the illustrated embodiment is preferably effected in such a way that a first clip strip (not shown) is fed by way of the first loading location 15 into the second magazine bar portion 14 or the magazine bar portion which is arranged in the discharge direction in relation to the loading location 15, that is to say in the storage region 16, in the direction of the clipping machine. That is followed by a feed of a second clip strip (not shown) by way of the first loading location 15 into the second magazine bar portion 14, displacement of the second clip strip out of the second magazine bar portion 14 into the first magazine bar portion 12, temporary fixing of the second clip strip in the first magazine bar portion 12, a feed of a third clip strip (not shown) by way of the first loading location 15 into the second magazine bar portion 14 and release of the second clip strip in the first magazine bar portion 12.

In that case a second clip strip is fed and displaced in the storage region 16 or on the guide rail 30 in opposite relationship to the discharge direction in order to ensure a free storage space 16 in the region of the loading location 15 and thus to ensure access for at least one further second clip strip. In that way the region of the storage space 16 beneath the retaining means in the discharge direction in relation to the loading location 15 remains free, in the region of the loading location 15.

### LIST OF REFERENCES

- 10: magazine bar
- 10a, 10b: first and second frontal magazine bar end respectively
- 10c: curvature of the second magazine bar portion
- 12: first magazine bar portion
- 12a, 12b: first and second end of the first magazine bar portion respectively
- 14: second magazine bar portion
- 14a, 14b: first and second end of the second magazine bar portion respectively
- 15: first loading location
- 16: storage region
- 25: second loading location
- 30: guide means
- 32a, b, c: insertion means
- 35: removal location
- 40: securing means
- 40a, b: first and second securing means portions respectively

## Claims

1. A magazine bar (10) for a clipping machine for temporarily storing and delivering closure clips which are assembled together to provide at least one clip strip, comprising a first and a second frontal magazine bar end (10a, 10b), and a storage region (16) which extends between the two magazine bar ends (10a, 10b) and into which a clip strip can be fed by way of a first loading location (15) and from which a clip strip can be discharged in the discharge direction by way of a removal location (35) provided at the second frontal magazine bar end (10b), **characterised in that** the first loading location (15) is provided between the first and second frontal magazine bar ends (10a, 10b) in such a way that a first and a second magazine bar portion (12, 14) is formed on both sides of the loading location (15).

2. A magazine bar according to claim 1,
**characterised in that** the first loading location (15) subdivides the magazine bar (10) into two magazine bar portions (12, 14) of substantially equal length.

3. A magazine bar according to claim 1,
**characterised in that** the first loading location (15) subdivides the magazine bar (10) into two magazine bar portions (12, 14) of substantially unequal length, preferably in the ratio of 1/3 to 2/3 from the first magazine bar portion (12) to the second magazine bar portion (14).

4. A magazine bar according to one of claims 1 to 3,
**characterised in that** there is provided a second loading location (25) at the first frontal magazine bar end (10a).

5. A magazine bar according to one of claims 1 to 4,
**characterised in that** provided in the region of the end, facing towards the first loading location (15), of the first magazine bar portion (12b) are clip strip retaining means reversibly releasable from a retaining position, for retaining a clip strip disposed in the first magazine bar portion (12).

6. A magazine bar according to claim 5,
**characterised in that** the clip strip retaining means have release means for reversibly releasing the clip strip retaining means out of their retaining position.

7. A magazine bar according to one of claims 1 to 6,
**characterised in that** the storage region (16) has guide means (30) for guiding the clip strips, which preferably extend from the first magazine bar end (10a) to the second magazine bar end (10b).

8. A magazine bar according to claim 7,
**characterised in that** provided in the region of the first loading location (15) are insertion means (32a, 32b) which overlap with the guide means (30).

9. A magazine bar according to one of claims 1 to 8,
**characterised in that** the second magazine bar portion (14) has a curvature (10c) in the region of the removal location (35).

10. A magazine bar according to one of claims 1 to 9,
**characterised in that** there is provided a bar housing (60) of U-shaped cross-section for at least partially enclosing the storage region (16).

11. A magazine bar according to one of claims 1 to 10,
**characterised in that** there are provided securing means (40).

12. A method of loading a magazine bar (10) for a clipping machine for temporarily storing and delivering closure clips which are assembled together to provide at least one clip strip, wherein the magazine bar (10) is in accordance with one of claims 1 to 11, including the following steps:
- selectively feeding a first clip strip into the second magazine bar portion (14) by way of the first loading location (15),
- feeding a second clip strip into the second magazine bar portion (14) by way of the first loading location (15),
- displacing the second clip strip out of the second magazine bar portion (14) into the first magazine bar portion (12),
- temporarily fixing the second clip strip in the first magazine bar portion (12),
- feeding a third clip strip into the second magazine bar portion (14) by way of the first loading location (15), and
- releasing the second clip strip in the first magazine bar portion (12).

13. A method according to claim 12,
in which a plurality of first clips are fed to the second magazine bar portion (14) by way of the first loading location (15) before a second clip strip is fed to the first magazine bar portion (12) by way of the first loading location (15) and the second magazine bar portion (14).

14. A method according to claim 12 or claim 13,
in which a plurality of second clips are fed to the first magazine bar portion (12) by way of the loading location (15) before at least one third clip strip is fed to the second magazine bar portion (14) by way of the loading location.

15. A method according to one of claims 12 to 14,
in which the clip strip retaining means are controllable by the clipping machine.

## Patentansprüche

1. Magazinstange (10) für eine Clipmaschine zum vorrübergehenden Aufbewahren und Abgeben von Verschlussclips, die zusammengefügt sind, um wenigstens einen Clipstreifen bereitzustellen, mit einem erstes und einem zweites vorderen Magazinstangenende (10a, 10b) und einen Aufbewahrungsbereich (16), der sich zwischen den zwei Magazinstangenenden (10a, 10b) erstreckt und in den ein Clipstreifen mittels einer ersten Ladestelle (15) zugeführt werden kann und aus dem ein Clipstreifen in einer Ausgaberichtung mittels einer Entnahmestelle (35), die an den zweiten vorderen Magazinstangenende (10b) vorgesehen ist, ausgegeben werden kann, **dadurch gekennzeichnet, dass** die erste Ladestelle (15) zwischen den ersten und zweiten vorderen Magazinstangenenden (10a, 10b) vorgesehen ist, derart, dass auf beiden Seiten der Ladestelle (15) ein erster und ein zweiter Magazinstangenabschnitt (12, 14) gebildet wird.

2. Magazinstange nach Anspruch 1,
**dadurch gekennzeichnet, dass** die erste Ladestelle (15) die Magazinstange (10) in zwei Magazinstangenabschnitte (12, 14) von im Wesentlichen gleicher Länge unterteilt.

3. Magazinstange nach Anspruch 1,
**dadurch gekennzeichnet, dass** die erste Ladestelle (15) die Magazinstange (10) in zwei Magazinstangenabschnitte (12, 14) von im Wesentlichen ungleicher Länge unterteilt, vorzugsweise im Verhältnis von 1/3 bis 2/3 von dem ersten Magazinstangenabschnitt (12) zu dem zweiten Magazinstangenabschnitt (14).

4. Magazinstange nach einem der Ansprüche 1 bis 3,
**dadurch gekennzeichnet, dass** eine zweite Ladestelle (25) an dem ersten vorderen Magazinstangenende (10a) vorgesehen ist.

5. Magazinstange nach einem der Ansprüche 1 bis 4,
**dadurch gekennzeichnet, dass** im Bereich des Endes des ersten Magazinstangenabschnitts (12b), das in Richtung zu der ersten Ladestelle (15) weist, Clipstreifenhaltemittel vorgesehen sind, die aus einer Halteposition reversibel lösbar sind, um einen im ersten Magazinstangenabschnitt (12) angeordneten Clipstreifen zu halten.

6. Magazinstang nach Anspruch 5,
**dadurch gekennzeichnet, dass** die Clipstreifenhaltemittel Lösemittel aufweisen zum reversiblen Lösen der Clipstreifenhaltemittel aus deren Halteposition.

7. Magazinstange nach einem der Ansprüche 1 bis 6,
**dadurch gekennzeichnet, dass** der Aufbewahrungsbereich (16) Führungsmittel (30) zum Führen der Clipstreifen aufweist, die sich vorzugsweise ausgehend vom ersten Magazinstangenende (10a) zum zweiten Magazinstangenende (10b) erstrecken.

8. Magazinstange nach Anspruch 7,
**dadurch gekennzeichnet, dass** im Bereich der ersten Ladestelle (15) Einführungsmittel (32a, 32b) vorgesehen sind, die mit den Führungsmitteln (30) überlappen.

9. Magazinstange nach einem der Ansprüche 1 bis 8,
**dadurch gekennzeichnet, dass** der zweite Magazinstangenabschnitt (14) eine Krümmung (10) im Bereich der Entnahmestelle (35) aufweist.

10. Magazinstange nach einem der Ansprüche 1 bis 9,
**dadurch gekennzeichnet, dass** ein Stangengehäuse (60) mit U-förmigen Querschnitt vorgesehen ist, um wenigstens teilweise den Aufbewahrungsbereich (16) zu um schließen.

11. Magazinstange nach einem der Ansprüche 1 bis 10,
**dadurch gekennzeichnet, dass** Sicherungsmittel (40) vorgesehen sind.

12. Verfahren zum Beladen einer Magazinstange (10) für eine Clipmaschine zum vorübergehenden Aufbewahren und Abgeben von Verschlussclips, die zusammengefügt sind, um wenigstens einen Clipstreifen bereitzustellen, wobei die Magazinstange (10) mit einem der Ansprüche 1 bis 11 in Übereinstimmung ist, die folgenden Schritte enthaltend:
- selektives Zuführen eines ersten Clipstreifens in den zweiten Magazinstangenabschnitt (14) mittels der ersten Ladestelle (15),
- Zuführen eines zweiten Clipstreifens in den zweiten Magazinstangenabschnitt (14) mittels der ersten Ladestelle (15),
- Verschieben des zweiten Clipstreifens aus dem zweiten Magazinstangenabschnitt (14) in den ersten Magazinstangenabschnitt (12),
- vorrübergehendes Fixieren des zweiten Clipstreifens in dem ersten Magazinstangenabschnitt (12),
- Zuführen eines dritten Clipstreifens in den zweiten Magazinstangenabschnitt (14) mittels der ersten Ladestelle (15), und
- Lösen des zweiten Clipstreifens im ersten Magazinstangenabschnitt (12).

13. Verfahren nach Anspruch 12,
bei dem mehrere erste Clips dem zweiten Magazinstangenabschnitt (14) mittels der ersten Ladestelle (15) zugeführt werden, bevor ein zweiter Clipstreifen zu dem ersten Magazinstangenabschnitt (12) mittels der ersten Ladestelle (15) und des zweiten Magazinstangenabschnitts (14) zugeführt wird.

14. Verfahren nach Anspruch 12 oder 13,
bei dem mehrere zweite Clips zu dem ersten Magazinstangenabschnitt (12) mittels der Ladestelle (15) zugeführt werden, bevor wenigstens ein dritter Clipstreifen zu dem zweiten Magazinstangenabschnitt (14) mittels der Ladestelle zugeführt wird.

15. Verfahren nach einem der Ansprüche 12 bis 14,
bei dem die Clipstreifenhaltemittel von der Clipmaschine steuerbar sind.

## Revendications

1. Barre (10) de chargeur pour une machine d'agrafage, afin d'emmagasiner temporairement et de distribuer des agrafes de fermeture qui sont mises ensemble pour fournir au moins une bande d'agrafe, comprenant une première et une seconde extrémités (10a, 10b) frontales de la barre de chargeur et une région (16) d'emmagasinage, qui s'étend entre les deux extrémités (10a, 10b) de la barre de chargeur et dans laquelle une bande d'agrafes peut être chargée par le biais d'un premier emplacement (15) de chargement et de laquelle une bande d'agrafes peut être déchargée dans la direction de déchargement par le biais d'un emplacement (35) de retrait prévu à la seconde extrémité (10b) frontale de la barre dé chargeur, **caractérisée en ce que** le premier emplacement (15) de chargement est prévu entre les première et seconde extrémités (10a, 10b) frontales de la barre de chargeur de manière à former une première et une seconde parties (12, 14) de barre de chargeur des deux côtés de l'emplacement (15) de chargement.

2. Barre de chargeur suivant la revendication 1,
**caractérisée en ce que** le premier emplacement (15) de chargement subdivise la barre (10) de chargeur en deux parties (12, 14) de barre de chargeur d'une longueur sensiblement égale.

3. Barre de chargeur suivant la revendication 1,
**caractérisée en ce que** le premier emplacement (15) de chargement subdivise la barre (10) de chargeur en deux parties (12, 14) de barre de chargeur d'une longueur sensiblement inégale, de préférence dans le rapport de 1/3 à 2/3 de la première partie (12) de barre de chargeur à la seconde partie (14) de barre de chargeur.

4. Barre de chargeur suivant l'une des revendications 1 à 3, **caractérisée en ce qu'**il est prévu un second emplacement (25) de chargement à la première extrémité (10a) frontale de la barre de chargeur.

5. Barre de chargeur suivant l'une des revendications 1 à 4,
**caractérisée en ce qu'**il est prévu, dans la région de l'extrémité faisant face au premier emplacement (15) de chargement de la première partie (12b) de la barre de chargeur, des moyens de retenue de la bande d'agrafes, libérables d'une manière réversible d'une position de retenue, pour retenir une bande d'agrafes placée dans la première partie (12) de la barre de chargeur.

6. Barre de chargeur suivant la revendication 5,
**caractérisée en ce que** les moyens de retenue de la bande d'agrafes ont des moyens de libération pour libérer réversiblement les moyens de retenue de la bande d'agrafes hors de leur position de retenue.

7. Barre de chargeur suivant l'une des revendications 1 à 6,
**caractérisée en ce que** la région (16) d'emmagasinage a des moyens (30) de guidage pour guider les bandes d'agrafes, qui s'étendent de préférence de la première extrémité (10a) de la barre de chargeur à la seconde extrémité (10b) de la barre de chargeur.

8. Barre de chargeur suivant la revendication 7,
**caractérisée en ce qu'**il est prévu, dans la région du premier emplacement (15) de chargement, des moyens (32a, 32b) d'insertion, qui chevauchent les moyens (30) de guidage.

9. Barre de chargeur suivant l'une des revendications 1 à 8,
**caractérisée en ce que** la seconde partie (14) de la barre de chargeur a une courbure (10c) dans la région de l'emplacement (35) de retrait.

10. Barre de chargeur suivant l'une des revendications 1 à 9,
**caractérisée en ce qu'**il est prévu un boîtier (60) de barre, de section transversale en forme de U, pour enfermer au moins en partie la région (16) d'emmagasinage.

11. Barre de chargeur suivant l'une des revendications 1 à 10,
**caractérisée en ce qu'**il est prévu des moyens (40) de fixation.

12. Procédé de chargement d'une barre (10) de chargeur pour une machine d'agrafage, afin d'emmagasiner temporairement et de distribuer des agrafes de fermeture qui sont mises ensemble en au moins une bande d'agrafes, la barre (10) de chargeur étant suivant l'une des revendications 1 à 11, comprenant les stades suivants :
- on charge sélectivement une première bande d'agrafes dans la seconde partie (14) de la barre de chargeur par le biais du premier emplacement (15) de chargement,
- on charge une deuxième bande d'agrafes dans la seconde partie (14) de la barre de chargeur par le biais du premier emplacement (15) de chargement,
- on fait passer la deuxième bande d'agrafes de la seconde partie (14) de la barre de chargeur à la première partie (12) de la barre de chargeur,
- on immobilise temporairement la deuxième bande d'agrafes dans la première partie (12) de la barre de chargeur,
- on charge une troisième bande d'agrafes dans la seconde partie (14) de la barre de chargeur par le biais du premier emplacement (15) de chargement, et
- on relâche la deuxième bande d'agrafes de la première partie (12) de la barre de chargeur.

13. Procédé suivant la revendication 12,
dans lequel on charge une pluralité de premières agrafes dans la seconde partie (14) de la barre de chargeur par le biais du premier emplacement (15) de chargement, avant de charger une deuxième bande d'agrafes dans la première partie (12) de la barre de chargeur par le biais du premier emplacement (15) de chargement et de la seconde partie (14) de la barre de chargeur.

14. Procédé suivant la revendication 12 ou 13,
dans lequel on charge une pluralité de deuxièmes agrafes dans la première partie (12) de la barre de chargeur par le biais de l'emplacement (15) de chargement, avant de charger au moins une troisième bande d'agrafes dans la seconde partie (14) de la barre de chargeur par le biais de l'emplacement de chargement.

15. Procédé suivant l'une des revendications 12 à 14,
dans lequel les moyens de retenue d'une bande d'agrafe peuvent être commandés par la machine d'agrafage.
